# EUROPEAN PATENT SPECIFICATION

(11) **EP 2 050 341 B1**
(45) Date of publication and mention of the grant of the patent: **10.05.2017**
(21) Application number: 07764072.0
(22) Date of filing: 16.07.2007
(51) Int. Cl.: A23C 9/14, A23C 9/16, A23C 9/12, A23C 9/13, A23C 9/142, A23C 9/15

(54) **METHOD FOR PREPARING DELACTOSED MILK**
VERFAHREN ZUR HERSTELLUNG VON LAKTOSeFREIEr MILCH
PROCÉDÉ DE PRÉPARATION DE LAIT DÉLACTOSÉ

(30) Priority: 17.07.2006 CN 200610029014
(43) Date of publication of application: 22.04.2009
(73) Proprietor: Shanghai Shanglong Dairy Co., Ltd., Shanghai 201406 (CN)
(72) Inventor: YAN, Yiqian, Shanghai 200011 (CN); WANG, Haixia, Shanghai 200031 (CN); CAO, Meiying, Shanghai 200031 (CN); YAN, Yimou, Shanghai 200080 (CN)
(74) Representative: Meyer-Dulheuer, Karl-Hermann
(86) International application number: PCT/CN2007/002170
(87) International publication number: WO 2008/011801

(56) References cited:
- CN-A- 1 084 700
- CN-A- 1 613 333
- CN-A- 1 757 289
- CN-A- 1 784 998
- KR-A- 20040 103 818
- US-A- 5 429 829
- LI D. ET AL.: 'Lactose Intolerance and Function Liquid Milk-Low Lactose Milk' ACADEMIC PERIODICAL OF FARM PRODUCTS PROCESSING no. 11, November 2005, pages 33 - 35, XP008112864
- LI W. ET AL.: 'Application and Development of Low-Lactose Milk' FOOD INDUSTRY TECHNOLOGY vol. 24, no. 9, September 2003, pages 83 - 85, XP008131681
- NAN Q. ET AL.: 'Latest Development about The Application of Enzyme Technology on Dairy Research' CHINA DIARY INDUSTRY vol. 32, no. 12, December 2004, pages 22 - 25, XP008131682

## Description

The invention relates to a method for preparing lactose-free milk products and low-lactose milk products starting with milk as raw material. The lactose-free and low-lactose milk products can be prepared in liquid form or in powder form.

Lactose is a unique disaccharide which exists in mammal breast milk and is also the main carbohydrate in milk (more than 99.8% of the total sugar content). Normal fresh cow milk contains 4.8-5.2% lactose, which is about 52% of non-fat milk solids or about 70% of the solid whey. Unless lactose is decomposed by enough lactase, digested and assimilated in the small intestine after it enters the alimentary tract, lactose intolerance occurs, including such symptoms as abdominal distension, abdominal pain and diarrhea (the Medical Encyclopedia, a service of the U.S. National Library of Medicine and the National Institutes of Health). Lactose intolerance is more prevalent in Asia, Africa, and Latin America.

Lactose mainly comes from dairy products. In order to avoid lactose intolerance, people usually choose to change their diet and consume no or only small amounts of milk or dairy products. However, as reported in the Word Journal of Gastroenterology (2006, Vol12, No.2, pp. 187-191), avoiding milk or dairy product can lead to improper diet structure and nutritional imbalance in the body.

In order to solve the problem of lactose intolerance, U.S. Pat. 6,881,428, U.S. Publ. 20050170044 and European Food Tech Award to Valio lactose free milk technology (2006/5/4) disclose that in nowadays milk processing, it is common to add lactase to milk in order to decompose lactose so as to relieve uncomfortable symptoms associated with drinking milk. However, because equimolar concentration of glucose and galactose are produced by the above-mentioned method, the total sugar content is not reduced. Particularly, because prolonged consumption of lactase-enriched milk is not beneficial to the blood sugar levels of diabetic patients, removal of lactose and reduction of the sugar content of milk is more useful to consumers' health.

Similarly, CN1084700 discloses methods related to fresh milk and dairy products with low lactose content. A definite amount of beta-semi lactosidase liquid is added to fresh milk or milk liquid. The lactosidase liquid is extracted from broad bean by using an amount of weak acid/weak acid salt depressor as solvent. Compared with the ordinary fresh milk and the milk product the lactose content of the milk and milk product obtained by this method is lowered by 1/2.At present, methods exist for removing lactose from milk. These methods are disclosed in domestic or overseas publications. For example, U.S. Pat. 5,429,829 discloses a method for preparing flavorful low-lactose cheese products with fermentation technique using chymosin. The cheese products are overall nutritious and have low lactose content. However, they lack the nutritional whey part.

CN1613333 discloses mixed milk with low content of lactose prepared from fresh milk, concentrated whey protein, modified starch, emulsifying stabilizer, microcrystalline cellulose, milk flavouring and water through pasteurizing the fresh milk, cold storing, heating to 75-85 °C, proportionally adding others while stirring, homogenizing, sterilizing and cooling.

U.S. Pat. 20050214409 discloses a method for removing lactose from milk directly with membrane separation and column chromatography.

CN1757289 discloses a dairy product without lactose prepared from milk through ultra-filtration to obtain a concentrated liquid A and a filtrate A, nano-filtering of said filtrate to obtain a concentrated liquid B and a filtrate B, and adding the concentrated liquid A to the filtrate B.

CN1784998 discloses a process for preparing non-sugar low-Na milk and lactose simultaneously features that the ultrafilter membrane is used to intercept protein and fat, the nano-filter membrane is used to intercept lactose, and the liquid filtered by nano-filter membrane and not containing lactose is flowing back into milk or whey tank to separate out the lactose from milk or whey liquid.

Furthermore, KR20040103818 discloses a method of making low-lactose milk by hydrolyzing milk with lactase, concentrating the obtained hydrolyzed lactose milk by a nanofiltration method to partially remove glucose and galactose and then adding with water is provided. The method removes glucose and galactose by the nanofiltration method and produces the product low in sweetness and off-flavor.

Unfortunately, the above mentioned methods exhibit a low efficiency and are difficult to implement in industrial production.

This invention provides an effective method for removing lactose from milk. Firstly, milk is defatted to obtain low-fat milk and milk fat, and then milk coagulant and calcium salt are added with stirring to the low-fat milk to produce milk curd. The milk curd is heated, stirred, and cut to give curd particles and whey. The curd particles are dissolved in a milk-dissolving solvent to obtain re-dissolved milk. Meanwhile delactosed whey, or delactosed whey powder are obtained by removing lactose using membrane separation technique. The re-dissolved milk is mixed with the delactosed whey, or delactosed whey powder, and the original milk fat is optionally added back, and emulsified by adding an emulsifier, to give lactose-free or low-lactose milk. Further, the obtained delactosed milk may be homogenized, and disinfected to give liquid milk, which may be further dried to offer lactose-free or low-lactose milk powder.

If milk is not de-fatted, and the milk liquid is directed with coagulant and dissolved in a milk-dissolving solvent to form a re-dissolved milk solution, and the lactose is removed from the whey by membrane separation and restoration, one may obtain low-lactose liquid milk or low-lactose milk powder.

The key technique of the invention is to dissolve curd particles in a milk-dissolving solvent to produce re-dissolved milk, and then to mix the re-dissolved milk with delactosed whey to produce delactosed liquid milk or delactosed milk powder. This method of the invention is also used with goat milk as raw material to produce delactosed goat milk or delactosed goat milk powder.

One of the purposes of this invention is to provide an improved method for effectively removing lactose from milk. Specifically, milk used as raw material, is either defatted or not, precipitated, ultra-filtered, re-dissolved, mixed and restored to give delactosed milk products. The products may be lactose-free liquid milk, lactose-free solid milk, low-lactose liquid milk, or low-lactose solid milk.

Another purpose of the invention is to provide the same method mentioned above to produce lactose-free goat liquid milk, low-lactose goat liquid milk, lactose-free goat milk powder, or low-lactose goat milk powder using goat milk as raw material.

The purposes of the invention are accomplished through the following:
1. Milk structure is modified by curding, which causes fat, protein, vitamins and minerals to congregate in the curd. If milk is defatted the concentration of the curd can be enhanced and the lactose content of curd particles decreased further. Since lactose mainly comes from whey having low molecular weight and being water-soluble, the effect of removing lactose can be doubled when membrane separation technique is used.
2. Milk used to be processed with chymosin to yield cheese or casein the makeup, flavor and ingredients of which were different from the original milk. The combination of milk-dissolving solvent, emulsifier, and homogenization of the invention can restore the curd and yield the re-dissolved milk.
3. Mixing the above-mentioned delactosed whey with the re-dissolved milk produces stable delactosed milk, the makeup of which is nearly the same as that of the original milk except for lactose.
4. There is no occurrence of lactose intolerance and abnormal blood glucose changes among people who lack lactase or suffer from diabetes after consuming the delactosed dairy products produced by the method of the invention.

The national standard of People's Republic of China GB13432-2004: for the labeling of prepackaged foods for special dietary uses allows the use of the label "no sugar" for foods in which the sugar content (including monosaccharide and disaccharide) is less or equal to 0.5%. Usually when the lactose content of dairy products is decreased by 20%-50%, lactose intolerance rarely occurs. The lactose content of the low-lactose liquid milk of the invention is less than or equal to 2.5 % (sugar content is decreased by 50%); the lactose content of full-fat, low-lactose milk powder of the invention is less than or equal to 20 % (sugar content is decreased by 50%).

In detail, the method of the invention provides the following steps:

To the defatted milk, food-grade milk coagulant is added to precipitate and separate milk fat, protein and minerals from whey. The precipitates are collected and re-dissolved in a curd solvent. Lactose is removed from the whey using membrane separation; then the whey is mixed with fat and the re-dissolved milk. The mixed delactosed milk is homogenized and disinfected to give delactosed liquid milk which may be dried to yield delactosed milk powder, or mixed with common milk to yield a variety of delactosed dairy products.

The preparation method of delactosed milk products comprises the following combinations of steps:
A(1) - A(6) to obtain delactosed milk;
A(1) - A(7) to obtain lactose-free liquid milk which can be further dried to yield lactose-free milk powder, or low-lactose liquid milk which can be further dried to yield low-lactose milk powder;
B(1) - B(5) to yield low-lactose liquid milk; and
B(1) - B(6) to yield low-lactose liquid milk and further dried to yield low-lactose milk powder.

A(1): Defatting milk to obtain low-fat milk and milk fat;
A(2): Heating the low-fat milk obtained in A(1) and adding milk coagulant, calcium salt solution with stirring to obtain milk curd;
A(3): Heating the milk curd, then cutting and stirring to obtain curd particles and whey; separating the curd from the whey;
A(4): Dissolving the curd particles in a milk-dissolving solvent to obtain re-dissolved milk the pH value of which is controlled at between 6.6 and 7.0;
A(5): Removing lactose from whey obtained in step A(3) using membrane separation to yield delactosed whey or delactosed whey powder;
A(6): Mixing the re-dissolved milk obtained in step A(4) with delactosed whey or delactosed whey powder obtained in step A(5), and adding an emulsifier to obtain delactosed milk using shear emulsification; and
A(7): Homogenizing and disinfecting the delactosed milk obtained in step A(6) to yield delactosed liquid milk which may be further dried to give delactosed milk powder, or homogenizing and disinfecting the mixture of delactosed milk obtained in step A(6) with common milk to obtain low-lactose liquid milk which may be further dried to give low-lactose milk powder.
B(1): Heating milk and adding milk coagulant and calcium salt solution, and stirring to obtain milk curd;
B(2): Heating the milk curd, cutting, and stirring to obtain curd particles and whey; separating the curd from the whey;
B(3): Dissolving the curd particles in a milk-dissolving solvent to obtain re-dissolved milk the pH value of which is controlled at between 6.6 and 7.0;
B(4): Removing lactose from the whey obtained in step B(2) using membrane separation to yield delactosed whey or delactosed whey powder;
B(5): Mixing the re-dissolved milk obtained in step B(3) with delactosed whey or delactosed whey powder obtained in step B(4), and adding an emulsifier to obtain delactosed milk using shear emulsification;
B(6): Homogenizing and disinfecting the delactosed milk to obtain delactosed liquid milk which may be further dried to obtain delactosed milk powder.

Lactose-free dairy products of the invention comprise lactose-free liquid milk and lactose-free milk powder. Low-lactose dairy products of the invention comprise low-lactose liquid milk and low-lactose milk powder.

The milk used as raw material in the methods of the invention is fresh milk or food-grade milk powder dissolved with drinking water.

The milk coagulant of the invention can be chymosin, acid supplements, or a mixture thereof. The chymosin can be animal chymosin such as calf chymosin or lamb chymosin, botanical chymosin such as chymopapain, or microbial chymosin such as mucor chymosin. The acid supplements can be hydrochloric acid, lactic acid, citric acid, or carbonic acid.

The milk-dissolving solvent of the invention can be carbonate-citric acid buffer, citrate-citric acid buffer, or phosphate buffer. The phosphate buffer can be potassium phosphate dibasic-potassium dihydrogen phosphate buffer. The salt concentration in the re-dissolved milk is controlled at between 0.005 M and 0.03 M. The pH value of the re-dissolved milk is controlled at between 6.6 and 7.0.

The emulsifier of the invention comprises a sucrose ester and lecithin.

The rotating speed of mixer used in the shear emulsification reaction is between 1000 rpm and 4000 rpm, the temperature is between 25°C and 60°C, and the reaction time is between 10 and 60 min.

The membrane separation technique of the invention includes ultrafiltration and nanofiltration. Ultrafiltration or nanofiltration is defined by membrane material and molecular weight cutoff. Ultrafiltration specification: membrane material is polyethersulfone or ceramic, and the membrane molecular weight cutoff is between 5000 and 20000. Nanofiltration specification: membrane material is composite membrane or ceramic membrane, and the nanofiltration membrane molecular weight cutoff is between 100 and 350.

The invention further provides a method for preparing low-lactose liquid milk comprising mixing lactose-free liquid milk or lactose-free milk powder with common milk in desired proportions, and thereafter homogenizing and disinfecting the mixture.

A method for preparing low-lactose milk powder comprises mixing lactose-free liquid milk or lactose-free milk powder with common milk in desired proportions, and thereafter homogenizing, disinfecting and drying the mixture.

The method for preparing lactose-free or low-lactose milk is also applicable to producing lactose-free goat milk or low-lactose goat milk powder starting with goat milk as raw material.

The method of the present invention has the following advantages:

1.Precipitating milk curd increases the removal efficiency of the lactose from whey and saves the production cost;

2. Mixing the curd with the delactosed whey and fat allows for retention of most nutrient components with the exception of lactose only;

3. Delactosed dairy products of the invention have less lactose and a lower total sugar content, and meanwhile they retain the original flavor;

4. The dairy products of the invention can also be further combined with other products to offer sugar-free or low-sugar healthy foods.

### Example 1

100 kg of milk from healthy cows were collected, defatted by centrifugation, heated at 61°C, and disinfected for 30 min. After the temperature was reduced down to 41°C, 100 mL of 10% CaCl₂ and 0.2% calf chymosin were added to the milk slowly with stirring. The solution was let stand for 45 min. After the reaction, the solution was heated quickly to 45°C and the milk curd was smashed with stirring to give curd particles and whey. The whey particles were filtered, collected, and added to 100 kg of 45°C purified water, stirred, filtered, and collected again. Meanwhile, the residue of the washed curd particles were also collected, dissolved in 0.01 molar potassium citrate-citric acid buffer to produce the re-dissolved milk the pH of which value was 6.7. The lactose of the collected whey was removed by ultrafiltration and nanofiltration to give delactosed whey which contained minerals and vitamins. The re-dissolved milk and the delactosed whey were mixed with fat, heated, homogenized at 20 MPa, and disinfected to give lactose-free liquid milk Tests showed that the delactosed milk contained ≤ 05.% lactose 0.5% total sugar, ≥ 3.0% fat, and ≥ 2.9% protein. The liquid milk can be further dried to give lactose-free milk powder. Tests showed that the delactosed milk powder contained ≤ 5% lactose 5% total sugar, and ≥ 30% proteins.

### Example 2

10 kg of food-grade skim milk powder (fat content ≤ 2.0%) was dissolved in 90 kg of water, and then 3000 mL of 10% calcium lactate and 1000 mL of 0.2% chymopapain solution were added with stirring, and heated to 39°C for 20 min. After the reaction, the solution was heated quickly to 55°C and the milk curd was smashed with stirring to give curd particles and whey. The whey particles were filtered, collected, and added to 100 kg of 45°C purified water, stirred, filtered, and collected again. Meanwhile, the residue of the washed curd particles was also collected, dissolved in 0.01 molar potassium carbonate-citric acid buffer and 0.2% sucrose ester to produce the re-dissolved milk, the pH value of which was 7.0. The lactose of the collected whey was removed by ultrafiltration and nanofiltration to give delactosed whey which contained minerals. The re-dissolved milk was mixed with the delactosed whey, homogenized, heated, and disinfected to give lactose-free liquid milk. Tests showed that the lactose-free milk contained ≤ 05.% lactose, ≤ 0.5% total sugar, ≤ 1.5% fat, and ≥ 2.9% proteins.

### Example 3

100 kg of milk from healthy cows was collected, defatted by centrifugation, and 1000 mL of 10% CaCl₂ was added slowly with stirring, then 2N hydrochloric acid was also added to the milk. The solution was heated to 41°C, the pH value was decreased to 5.0. The solution was allowed to stand for 45 min. After the reaction, the milk curd was smashed with stirring to give curd particles and whey. The whey was filtered, collected, and added to 100 kg of purified water, stirred, filtered, and collected again. Repeat the filtering until the pH value of the whey reached 6.5. Meanwhile, the residue of the washed curd particles was also collected, dissolved with K₂HPO₄ - KH₂PO₄ to produce the re-dissolved milk, the pH value of which was 6.8. The lactose of the collected whey was removed by membrane filtration to give delactosed whey which contained minerals. The re-dissolved milk was mixed with the delactosed whey to give 80 kg of lactose-free milk which was mixed with 80 kg of common fresh milk, homogenized, heated, and disinfected to give low-lactose liquid milk. Tests showed the low-lactose milk contained ≤ 2.5% lactose 2.5% total sugar, ≥ 1.5% fat, and ≥ 2.9% proteins.

### Example 4

10 kg of defatted milk powder (fat content ≤ 2.0%) was dissolved in 90 kg of water to obtain low-fat milk. The milk was coagulated with lactic acid, and dissolved with citric acid buffer to give the re-dissolved milk. The re-dissolved milk was mixed with 1 kg of high-protein delactosed whey powder, 1 kg of milk fat, and 0.02 kg of lecithin, homogenized and disinfected to give lactose-free liquid milk. Tests showed that the lactose-free milk contained ≤ 0.5% lactose 0.5% total sugar, ≥ 1.5%fat, and ≥ 2.9% proteins.

### Example 5

100 ml of 10% CaCl₂, 0.2% mucor chymosin solution, and 1 N hydrochloric acid were added to 100 kg of milk from healthy cows slowly with stirring. The temperature increased up to 39°C. The pH value decreased to 6.5. The mixture was allowed to stand for 45 min. After the reaction, the milk curd was smashed with stirring to give curd particles and whey. The whey was filtered, collected, and added to 100 kg of purified water, stirred, filtered, and collected again. Meanwhile, the residue of the washed curd particles was also collected, and dissolved in sodium citrate-citric acid buffer to produce the re-dissolved milk, the pH value of which was 6.8. The lactose of the collected whey was removed by membrane filtration to give delactosed whey which contained minerals. The re-dissolved milk was mixed with the delactosed whey to give 80 kg of lactose-free milk, homogenized, heated, and disinfected to give low-lactose liquid milk. Tests showed the low-lactose milk container ≤ 2.5% lactose, ≤ 2.5% total sugar, ≥ 3.0% fat, and ≥ 2.9% proteins.

### Example 6

Fig chymopapin, and CaCl₂ solution were added to 1 kg of goat milk to produce goat milk curd and whey. The curd was dissolved in citric acid buffer the pH value of which was 7.0 to obtain re-dissolved milk. Afterward, lactose was removed from the whey by membrane filtration. The re-dissolved milk was mixed with the delactosed whey, and homogenized to obtain lactose-free goat milk. Tests showed that the lactose-free goat milk contained ≤ 0.5% lactose, ≤ 0.5% total sugar, ≥ 1.5% fat, and ≥ 2.9% proteins.

## Claims

1. A method for preparing delactosed milk products, **characterized in that** the delactosed milk products are prepared through the steps of A(1)-A(6), A(1)-A(7), B(1)-B(5), or B(1)-B(6):
A(1): defatting milk to obtain low-fat milk and milk fat;
A(2): heating the low-fat milk obtained in step A(1) and adding milk coagulant and calcium salt solution with stirring to obtain milk curd;
A(3): heating the milk curd, cutting, and stirring to obtain curd particles and whey, and separating and collecting the curd particles and the whey;
A(4): dissolving the curd particles in a milk-dissolving solvent to obtain re-dissolved milk, the pH value of which is controlled at between 6.6 and 7.0;
A(5): removing lactose from the whey obtained in step A(3) using membrane separation to obtain delactosed whey or delactosed whey powder;
A(6): mixing the re-dissolved milk obtained in step A(4) with the delactosed whey or the delactosed whey powder obtained in step A(5), and adding an emulsifier to obtain lactose-free milk by shear emulsification reaction;
A(7): homogenizing and disinfecting the lactose-free milk obtained in step A(6) to yield lactose-free liquid milk which may be further dried to give lactose-free milk powder, or homogenizing and disinfecting the mixture of lactose-free milk obtained in step A(6) with common milk to obtain low-lactose liquid milk which may be further dried to give low-lactose milk powder;
B(1): heating milk and adding milk coagulant and a calcium salt solution with stirring to obtain milk curd;
B(2): heating the milk curd, cutting, and stirring to obtain curd particles and whey, and separating and collecting the curd particles and the whey;
B(3): dissolving the curd particles in a milk-dissolving solvent to obtain re-dissolved milk, the pH value of which is controlled at between 6.6 and 7.0;
B(4): removing lactose from the whey obtained in step B(2) using membrane separation to obtain delactosed whey or delactosed whey powder;
B(5): mixing the re-dissolved milk obtained in step B(3) with delactosed whey or delactosed whey powder obtained in step B(4), and adding an emulsifier to obtain lactose-free milk using shear emulsification reaction; and
B(6): homogenizing and disinfecting the low-lactose milk to obtain low-lactose liquid milk, which may be further dried to obtain low-lactose milk powder.

2. The method of claim 1, **characterized in that** the milk obtained in step A(1) comprises fresh milk, or food-grade milk powder dissolved in drinking water.

3. The method of claim 1, **characterized in that** the fat content of the low-fat milk obtained in step A(1) is between 0.2% and 2.0%.

4. The method of claim 1, **characterized in that** the milk coagulant is step A(2) or step B(1) is chymosin, an acid supplement, or a mixture thereof.

5. The method of claim 1, **characterized in that** the calcium salt in step A(2) or step B(1) is calcium chloride, calcium citrate, or calcium lactate.

6. The method of claim 4, **characterized in that** the chymosin is animal chymosin, such as calf chymosin or lamb chymosin, botanical chymosin, such as chymopapain, or microbial chymosin, such as mucor chymosin; and the acid supplement is hydrochloric acid, lactic acid, citric acid, or carbonic acid.

7. The method of claim 1, **characterized in that** the membrane separation technique in step A(5) or step B(4) is ultrafiltration when the molecular weight cutoff is between 1000 and 10000 and nanofiltration when the molecular weight cutoff is between 100 and 350.

8. The method of claim 1, **characterized in that** in step A(6), the obtained milk products are defatted lactose-free milk, low-fat lactose-free milk, or full-fat lactose-free milk depending on the quantity of milk fat.

9. The method of claim 1, **characterized in that** the milk-dissolving solvent in step A(4) or B(3) is carbonate-citric acid buffer, citrate-citric acid buffer, or phosphate buffer; and the salt concentration of the re-dissolved milk is controlled at between 0.005 M and 0.03 M.

10. The method of claim 1, **characterized in that** the shear emulsification in step A(6) or step B(5) is performed at a rotational speed of between 1000 rpm and 4000 rpm, at a temperature of between 25°C and 60°C, and in a time period of between 10 and 60 min.

11. The method of claim 1, **characterized in that** the lactose-free liquid milk or the lactose-free milk powder in step A(7) can be mixed with common milk or milk powder to give low-lactose liquid milk or low-lactose milk powder.

12. The method of claim 1, **characterized in that** the method is practicable in producing lactose-free goat liquid milk, lactose-free goat milk powder, low-lactose goat liquid milk, or low-lactose goat milk powder when goat milk is used as raw material.

13. The method of claim 1, **characterized in that** in step A(6), the re-dissolved milk is mixed with the delactosed whey or delactosed whey powder, the milk fat obtained in step A(1) is added back and an emulsifier is added to obtain lactose-free milk by shear emulsification reaction.

## Patentansprüche

1. Verfahren zur Herstellung lactosefreier Milcherzeugnisse, **dadurch gekennzeichnet, dass** die lactosefreien Milcherzeugnisse durch die Schritte A(1) -A(6), A(1) -A(7), B(1) -B(5) oder B(1) -B(6) hergestellt werden:
A(1): Entfetten der Milch, um fettarme Milch und Milchfett zu erhalten;
A(2): Erhitzen der in Schritt A(1) erhaltenen fettarmen Milch und Zugabe von Milchkoagulationsmittel und Calciumsalzlösung unter Rühren, um Milchquark zu erhalten;
A(3): Erhitzen des Milchquarks, Schneiden und Rühren, um Quarkteilchen und Molke zu erhalten, und Trennen und Sammeln der Quarkteilchen und der Molke;
A(4): Lösen der Quarkteilchen in einem milchauflösenden Lösungsmittel, um wieder-aufgelöste Milch zu erhalten, deren pH-Wert zwischen 6,6 und 7,0 eingestellt wird;
A(5): Entfernen von Lactose aus der in Schritt A(3) erhaltenen Molke unter Verwendung von Membrantrennung zur Gewinnung von lactosefreier Molke oder lactosefreiem Molkepulver;
A(6): Mischen der in Schritt A(4) erhaltenen wieder aufgelösten Milch mit der in Schritt A(5) erhaltenen lactosefreien Molke oder dem lactosefreien Molkenpulver und gegebenenfalls Zugabe des in Schritt A(1) erhaltenen Milchfetts und eines Emulgators, um lactosefreie Milch durch Scher-Emulgierungsreaktion zu erhalten;
A(7): Homogenisieren und Desinfizieren der in Schritt A(6) erhaltenen lactosefreien Milch, um lactosefreie flüssige Milch zu erhalten, die weiter getrocknet werden kann, um lactosefreies Milchpulver zu ergeben, oder Homogenisieren und Desinfizieren der Mischung aus lactosefreier Milch, erhalten in Schritt A(6) mit gewöhnlicher Milch, um flüssige Milch mit niedrigem Lactosegehalt zu erhalten, die weiter getrocknet werden kann, um Milchpulver mit niedrigem Lactosegehalt zu ergeben;
B(1): Erwärmen von Milch und Zugabe von Milchkoagulationsmittel und einer Calciumsalzlösung unter Rühren, um Milchquark zu erhalten;
B(2): Erhitzen des Milchquarks, Schneiden und Rühren, um Quarkteilchen und Molke zu erhalten, und Trennen und Sammeln der Quarkteilchen und der Molke;
B(3): Lösen der Quarkteilchen in einem milchauflösenden Lösungsmittel, um wieder-aufgelöste Milch zu erhalten, deren pH-Wert zwischen 6,6 und 7,0 eingestellt wird;
B(4): Entfernen von Lactose aus der in Schritt B(2) erhaltenen Molke unter Verwendung von Membrantrennung, um lactosefreie Molke oder lactosefreies Molkepulver zu erhalten;
B(5): Mischen der in Schritt B(3) erhaltenen wieder-aufgelösten Milch mit lactosefreier Molke oder lactosefreiem Molkepulver, die in Schritt B(4) erhaltenen wurden, und Zugabe eines Emulgators, um lactosefreie Milch durch Scher-Emulgierungsreaktion zu erhalten; und
B(6): Homogenisieren und Desinfizieren der Milch mit niedrigem Lactosegehalt, um flüssige Milch mit niedrigem Lactosegehalt zu erhalten, die dann getrocknet werden kann, um Milchpulver mit niedrigem Lactosegehalt zu erhalten.

2. Verfahren nach Anspruch 1, **dadurch gekennzeichnet, dass** die in Schritt A(1) erhaltene Milch Frischmilch oder in Trinkwasser aufgelöstes Lebensmittel-Milchpulver enthält.

3. Verfahren nach Anspruch 1, **dadurch gekennzeichnet, dass** der Fettgehalt der in Schritt A(1) erhaltenen fettarmen Milch zwischen 0,2 und 2,0% liegt.

4. Verfahren nach Anspruch 1, **dadurch gekennzeichnet, dass** das Milchkoagulierungsmittel in Schritt A(2) oder Schritt B(1) Chymosin, ein Säurezusatz oder ein Gemisch daraus ist.

5. Verfahren nach Anspruch 1, **dadurch gekennzeichnet, dass** das Calciumsalz in Schritt A(2) oder Schritt B(1) Calciumchlorid, Calciumcitrat oder Calciumlactat ist.

6. Verfahren nach Anspruch 4, **dadurch gekennzeichnet, dass** das Chymosin tierische Chymosin, wie Kalb-Chymosin oder Lamm-Chymosin, pflanzliches Chymosin, wie Chymopapain, oder mikrobielles Chymosin, wie Mucor-Chymosin ist; und der Säurezusatz Salzsäure, Milchsäure, Citronensäure oder Kohlensäure ist.

7. Verfahren nach Anspruch 1, **dadurch gekennzeichnet, dass** die Membrantrenntechnologie in Schritt A(5) oder Schritt B(4) eine Ultrafiltration ist, wenn die Molekulargewichtsgrenze zwischen 1000 und 10000 liegt und eine Nanofiltration ist, wenn die Molekulargewichtsgrenze zwischen 100 und 350 liegt.

8. Verfahren nach Anspruch 1, **dadurch gekennzeichnet, dass** die in Schritt A(6) erhaltenen Milchprodukte entfettete lactosefreie Milch, fettarme lactosefreie Milch oder Vollfett-lactosefreie Milch, in Abhängigkeit von der Menge an Milchfett, sind.

9. Verfahren nach Anspruch 1, **dadurch gekennzeichnet, dass** das milchauflösende Lösungsmittel in Schritt A(4) oder B(3) ein Carbonat-Zitronensäure-Puffer, Citrat-Zitronensäure-Puffer oder ein Phosphatpuffer ist; und die Salzkonzentration der wieder-aufgelösten Milch zwischen 0,005 M und 0,03 M eingestellt wird.

10. Verfahren nach Anspruch 1, **dadurch gekennzeichnet, dass** die Scheremulgierung in Schritt A(6) oder Schritt B(5) bei einer Drehzahl zwischen 1000 U / min und 4000 U / min bei einer Temperatur zwischen 25° C und 60° C durchgeführt wird und in einer Zeitspanne von zwischen 10 und 60 min.

11. Verfahren nach Anspruch 1, **dadurch gekennzeichnet, dass** die lactosefreie flüssige Milch oder das lactosefreie Milchpulver in Schritt A(7) mit gewöhnlicher Milch oder Milchpulver vermischt werden kann, um flüssige Milch mit niedrigem Lactosegehalt oder Milchpulver mit niedrigem Lactosegehalt zu erhalten.

12. Verfahren nach Anspruch 1, **dadurch gekennzeichnet, dass** das Verfahren bei der Herstellung von lactosefreier Ziegenmilch, lactosefreiem Ziegenmilchpulver, Ziegenmilch mit geringem Lactosegehalt oder Ziegenmilchpulver mit geringem Lactosegehalt, bei der Verwendung von Ziegenmilch als Ausgangsmaterial durchführbar ist.

13. Verfahren nach Anspruch 1, **dadurch gekennzeichnet, dass** die in Schritt A(6) wieder-aufgelöste Milch mit der laktosefreien Molke oder dem laktosefreien Molkepulver gemischt wird, das in Schritt A(1) erhaltene Milchfett wieder zugegeben und ein Emulgator zugegeben wird, um lactosefreie Milch durch Scher-emulgierungsreaktion zu erhalten.

## Revendications

1. Un procédé pour la production de produits laitiers sans lactose, **caractérisé en ce que** les produits laitiers sans lactose sont préparés par les étapes A(1) - A(6), A(1) -A(7), B(1) -B(5), ou B(1) -B(6):
A(1): dégraissage du lait pour obtenir du lait à faible teneur en matières grasses et des matières grasses de lait;
A(2): chauffage du lait obtenu à l'étape A(1) et l'addition d'un coagulant de lait et d'une solution de sel de calcium tout en agitant pour obtenir un lait caillé;
A(3): chauffer le lait caillé, couper et mélanger pour obtenir des particules de caillé et du lactosérum, et séparer et recueillir les particules de caillé et le lactosérum;
A(4): déliter les particules de caillé dans un solvant de dissolution du lait pour obtenir du lait re-dissolu, la valeur du pH est ajustée entre 6,6 et 7,0;
A(5): retirer le lactose du lactosérum obtenu à l'étape A(3) en utilisant une séparation par membrane pour la production de lactosérum sans lactose ou de lactosérum en poudre sans lactose;
A(6): mélanger le lait reconstitué obtenue à l'étape A(4) avec le lactosérum sans lactose ou le lactosérum en poudre sans lactose obtenue à l'étape A(5) du, et éventuellement ajouter la matière grasse du lait et un émulsifiant obtenu à l'étape A(1), pour obtenir du lait sans lactose utilisant une réaction d'émulsification de cisaillement;
A(7): homogénéisation et désinfection du lait sans lactose obtenu à l'étape A(6) pour obtenir du lait liquide sans lactose qui peut ensuite être séché pour donner du lait en poudre sans lactose ou homogénéisation et désinfection du mélange de lait sans lactose obtenu à l'étape A(6) avec du lait ordinaire pour obtenir du lait liquide à faible teneur en lactose qui peut ensuite être séché pour donner du lait en poudre à faible teneur en lactose;
B(1): chauffer le lait en ajoutant un coagulant de lait et une solution de sel de calcium tout en agitant pour obtenir un lait caillé;
B(2): chauffer le lait caillé, couper et mélanger pour obtenir des particules de caillé et du lactosérum, et séparer et recueillir les particules de caillé et le lactosérum;
B(3): déliter les particules de caillé dans un solvant de dissolution du lait pour obtenir du lait re-dissolu, la valeur du pH est ajustée entre 6,6 et 7,0;
B(4): retirer le lactose du lactosérum obtenu à l'étape B(2) en utilisant une séparation par membrane pour la production de lactosérum sans lactose ou de lactosérum en poudre sans lactose;
B(5): mélanger le lait re-dissolu obtenue à l'étape B(3) avec le lactosérum sans lactose ou le lactosérum en poudre sans lactose obtenue à l'étape B(4), et ajouter un émulsifiant pour obtenir du lait sans lactose utilisant une réaction d'émulsification de cisaillement;
B(6): homogénéisation et désinfection le lait à faible teneur en lactose pour obtenir du lait liquide à faible teneur en lactose qui peut ensuite être séché pour donner du lait en poudre à faible teneur en lactose.

2. Procédé selon la revendication 1, **caractérisé en ce que** le lait obtenu 'à l'étape A(1) contient du lait frais ou du lait alimentaire en poudre dissous dans de l'eau potable.

3. Procédé selon la revendication 1, **caractérisé en ce que** la teneur en matières grasses du lait à faible teneur en matière grasse, qui est obtenue dans l'étape A(1) est entre 0,2 et 2,0%.

4. Procédé selon la revendication 1, **caractérisé en ce que** le coagulant de lait dans l'étape A(2) ou l'étape B(1) est la chymosine, un additif acide ou un mélange de ceux-ci.

5. Procédé selon la revendication 1, **caractérisé en ce que** le sel de calcium dans l'étape A(2) ou l'étape B(1) est du chlorure de calcium, du citrate de calcium ou le lactate de calcium.

6. Procédé selon la revendication 4, **caractérisé en ce que** la chymosine est de la chymosine animale telles que la chymosine de veau ou la chymosine d'agneau, de la chymosine végétale, tels que la chymopapaïne, ou la chymosine microbienne telle que la chymosine Mucor; et l'additif acide est de l'acide chlorhydrique, l'acide lactique, l'acide citrique ou de l'acide carbonique.

7. Procédé selon la revendication 1, **caractérisé en ce que** la technologie de séparation par membrane à l'étape A(5) ou l'étape B(4) est une ultrafiltration, lorsque la limite de masse moléculaire est entre 1000 et 10000 et une nanofiltration, lorsque la limite de masse moléculaire est entre 100 et 350.

8. Procédé selon la revendication 1, **caractérisé en ce que** les produits laitiers obtenus dans l'étape A(6) comportent du lait dégraissé sans lactose, du lait sans lactose à faible teneur en matières grasses ou du lait sans lactose riche en matière grasse, en fonction de la quantité de matières grasses dans le lait.

9. Procédé selon la revendication 1, **caractérisé en ce que** le solvant de dissolution du lait dans l'étape A(4) ou B(3) est un tampon acide citrique-carbonate, un tampon acide citrique-citrate ou un tampon phosphate; et la concentration en sel du lait de re-dissous est ajustée entre 0,005 M et 0,03 M.

10. Procédé selon la revendication 1, **caractérisé en ce que** la réaction d'émulsification de cisaillement à l'étape A(6) ou l'étape B(5) est effectuée à une vitesse de rotation entre 1000 tr / min et 4000 tr / min à une température entre 25° C et 60° C pendant 10 à 60 min.

11. Procédé selon la revendication 1, **caractérisé en ce que** le lait liquide sans lactose ou la poudre de lait sans lactose dans l'étape A(7) peuvent être mélangés avec du lait ordinaire ou du lait en poudre afin d'obtenir du lait liquide à faible teneur en lactose ou du lait en poudre à faible teneur en lactose.

12. Procédé selon la revendication 1, **caractérisé en ce que** le procédé peut être réalisée pour la production de lait de chèvre sans lactose, de lait de chèvre sans lactose en poudre, de lait de chèvre à faible teneur en lactose ou de poudre de lait de chèvre à faible teneur en lactose, en utilisant du lait de chèvre comme produit de départ.

13. Procédé selon la revendication 1, **caractérisé en ce que** le lait redissous à l'étape A(6) est mélangé avec le lactosérum sans lactose ou le lactosérum en poudre sans lactose, la matière grasse du lait obtenu à l'étape A(1) est rajoutée et un émulsifiant est ajouté, pour obtenir du lait sans lactose utilisant une réaction d'émulsification de cisaillement.
